(19) **Europäisches Patentamt / European Patent Office / Office européen des brevets**

(11) **EP 3 023 874 A1**

(12) **EUROPEAN PATENT APPLICATION**

(43) Date of publication:
**25.05.2016 Bulletin 2016/21**

(51) Int Cl.:
**G06F 9/45** (2006.01)    **G06F 7/483** (2006.01)
**G06F 9/30** (2006.01)

(21) Application number: **15179373.4**

(22) Date of filing: **31.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.11.2014 KR 20140164412**

(71) Applicant: **Samsung Electronics Co., Ltd.**
**Suwon-si, Gyeonggi-do, 443-742 (KR)**

(72) Inventors:
• **KIM, Hoyoung**
**443-803 Gyeonggi-do (KR)**
• **KIM, Seonggun**
**443-803 Gyeonggi-do (KR)**
• **RYU, Soojung**
**443-803 Gyeonggi-do (KR)**

(74) Representative: **Portch, Daniel**
**Elkington and Fife LLP**
**Prospect House**
**8 Pembroke Road**
**Sevenoaks, Kent TN13 1XR (GB)**

(54) **METHOD AND APPARATUS FOR PROCESSING DATA USING CALCULATORS HAVING DIFFERENT DEGREES OF ACCURACY**

(57)    A method of processing data includes classifying input data into first data and second data, the second data being different from the first data, separately compiling the first data and the second data, and providing the compiled first data and the compiled second data to a first operator and a second operator, respectively, in which the first operator performs an operation different from an operation performed by the second operator.

## FIG. 1

**Description**

FIELD OF THE INVENTION

The following description relates to a method and apparatus for processing data using calculators having different degrees of accuracy.

BACKGROUND OF THE INVENTION

Central processing units (CPUs) or graphics processing units (GPUs) that process data presented in a floating point format may perform calculations by inserting a number corresponding to the data into a mathematical function.
A CPU or GPU may perform calculations by using a lookup table that includes the necessary information for calculating all pieces of data that may be input. However, since a large amount of information must be stored in the lookup table to produce relatively accurate calculation results, a large amount of storage space is required. Also, a CPU or GPU may perform calculations by approximating the mathematical function as a polynomial expression. However, since a high order polynomial expression is needed to produce relatively accurate calculation results, a large number of logic gates are switched during the calculations.

SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
In one general aspect, a method of processing data includes classifying input data into first data and second data, the second data being different from the first data, separately compiling the first data and the second data, and providing the compiled first data and the compiled second data to a first operator and a second operator, respectively, in which the first operator performs an operation different from an operation performed by the second operator.
By way of example, a first operator that performs a relatively accurate operation and a second operator that performs an approximate operation may be separately used according to a level of accuracy required, thereby reducing an amount of power consumed for the data processing. Thus, the size of an apparatus implementing such operators may be reduced.
For example, data indicating a position and data indicating a color which are included in 3-dimensional graphics may be separately processed.
According to another general aspect, there is provided a non-transitory computer readable storage medium having stored thereon a program, which when executed by a computer, performs the above method.
According to another general aspect, an apparatus for processing input data includes a compiling unit configured to classify the input data into first data and second data, the second data being different from the first data, and to separately compile the first data and the second data, and an operation unit including a first operator configured to perform an operation based on the compiled first data and a second operator configured to perform an operation based on the compiled second data, in which the operation performed by the first operator is different from the operation performed by the second operator.
According to another general aspect, a compiler for providing data to a processor including a plurality of operators, in which the compiler is configured to classify the data into first data and second data, the second data being different from the first data, and separately compile the first data and the second data, and provide the compiled first data and the compiled second data to a first operator and a second operator, respectively, in which the operation performed by the first operator is different from the operation performed by the second operator.
According to another general aspect, an operation apparatus includes a first operator configured to perform an operation by using first data provided by a compiler, and a second operator configured to perform an operation by using second data provided by the compiler, in which the operation performed by the first operator is different from the operation performed by the second operator.
Other features and aspects will be apparent from the following detailed description, the drawings, and the claims.

BRIEF DESCRIPTION OF THE EMBODIMENTS

FIG. 1 is a block diagram illustrating an example of a data processing apparatus;
FIG. 2 is a flowchart for explaining an example of a data processing method;

FIG. 3 is a flowchart for explaining another example of the data processing method;

FIG. 4A is a flowchart for explaining an example in which a determination unit determines first data with respect to data indicating a position and a compiling unit compiles the first data and second data;

FIG. 4B illustrates an example according to the flowchart of FIG. 4A;

FIG. 4C is a flowchart for explaining an example in which the determination unit determines the first data with respect to other keywords included in a shader code and the compiling unit compiles the first data and the second data;

FIG. 4D is a flowchart for explaining an example in which the determination unit determines a compute shader included in a shader code as the first data and the compiling unit compiles the first data and the second data;

FIG. 4E is a flowchart for explaining an example in which the determination unit determines the first data which requires high accuracy and is included in the shader code and the compiling unit compiles the first data and the second data;

FIG. 5 is a flowchart for explaining an example in which the operation unit operates the compiled first data and the compiled second data;

FIG. 6 is a view for explaining an example of the operation of a data processing apparatus;

FIG. 7 is a block diagram illustrating an example of a compiling apparatus and an operation apparatus; and

FIG. 8 is a block diagram illustrating an example in which the operation unit is included in a graphics processing unit (GPU).

Throughout the drawings and the detailed description, the same reference numerals refer to the same elements. The drawings may not be to scale, and the relative size, proportions, and depiction of elements in the drawings may be exaggerated for clarity, illustration, and convenience.

DETAILED DESCRIPTION OF THE DRAWINGS

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness. The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

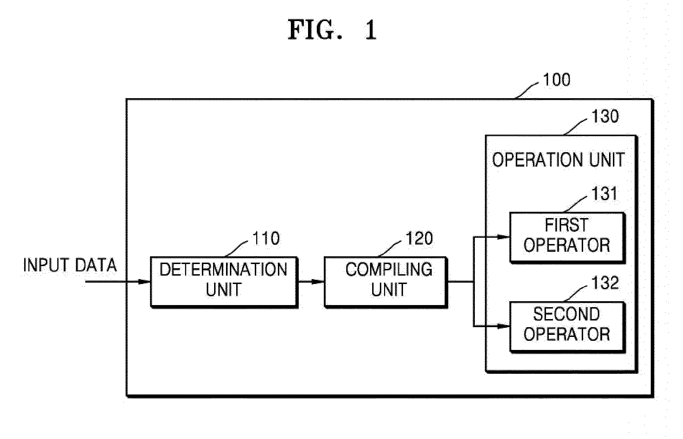

FIG. 1 is a block diagram illustrating an example of a data processing apparatus 100. Referring to FIG. 1, the data processing apparatus 100 includes a determination unit 110, a compiling unit 120, and an operation unit 130.

FIG. 1 illustrates elements that are related to the data processing apparatus 100. However, the data processing apparatus 100 illustrated in FIG. 1 is not limited thereto. Accordingly, it would be understood by one of ordinary skill in the art that other common elements may be further included in addition to the elements illustrated in FIG. 1.

The determination unit 110, the compiling unit 120, and the operation unit 130 of the data processing apparatus 100, which are illustrated in FIG. 1, may correspond to one or a plurality of processors. The processor may be embodied by an array of a plurality of logic gates, or by a combination of a general-purpose microprocessor and a memory storing a program that is executable in the microprocessor. Also, it would be understood by one of ordinary skill in the art that the processor may be embodied by hardware in a different form.

The determination unit 110 determines first data among input data. The first data refers to data requiring a relatively accurate operation. In the various examples of the present application, the requiring of a relatively accurate operation refers to a result of a predetermined operation having no error. For example, while an equation that $1.00+1.01=2.01$ is regarded as an accurate operation, an equation that $1.00+1.01 ≒ 2.01$ is regarded as an approximation operation. Also, the input data refers to data that is input to the data processing apparatus 100, and various pieces of information may be included in the input data. The input data may include data requiring a relatively accurate operation and data that does not require an accurate operation.

For example, in one configuration, the data processing apparatus 100 is used for rendering of an object. The input data input to the data processing apparatus 100 may be a shader code. The object is a model that is presented as an image to be output to a screen. The object refers to a target on which rendering is performed by the data processing apparatus 100.

For example, assuming that an object to be output to a screen is a tiger, an image including the shape, position, and color of the tiger is generated by rendering and a generated image is output to the screen. If the data processing apparatus 100 is assumed to include only an operator that performs a relatively accurate operation, accuracy of information, for example, the shape, position, and color, expressing the tiger included in the image may be improved. That is, the tiger may be accurately expressed, but the amount of power consumed during the processing of data by the data processing apparatus 100 may be increased.

Accordingly, if the data processing apparatus 100 operates only the first data requiring a relatively accurate operation among the input data, for example, a shader code, by using a first operator that performs accurate operation and the second data that is the remaining data of the input data excluding the first data by using a second operator that performs an approximate operation, the amount of power consumed during the processing of data by the data processing apparatus 100 may be reduced.

The determination unit 110 determines the first data requiring a relatively accurate operation among the input data based on keywords included in the input data. For example, the determination unit 110 identifies a variable designated by a particular built-in or a particular application program interface (API) from the input data, selects a code including an identified variable, and determines a selected code as the first data.

For example, the variable designated by the built-in or API used when the determination unit 110 determines the first data may include "position", "size", "distance", "coord", "tesslevel", or a combination thereof, but the example is not limited thereto.

If the input data is assumed to be a shader code, the determination unit 110 selects data indicating the position of an object on which rendering is performed, as the first data. In the shader code, the second data excluding the first data includes data indicating the color of an object. For example, assuming the object is a tiger, if data indicating the position of a tiger is not accurately operated, quality of an image may be remarkably degraded. Alternatively, when the data indicating the color of a tiger is approximately operated to have a certain accuracy, not accurately though, the image quality may be maintained at a certain level. As the determination unit 110 selects the data indicating the position of an object, as the first data, the operation unit 130 accurately operates the compiled first data and approximately operates the compiled second data. Accordingly, the data processing apparatus 100 reduces the power needed for processing the data and improves a data processing speed.

In one configuration, the compiling unit 120 compiles the input data by classifying the input data into the first data and the second data.

The compiling unit 120 performs compiling of the input data by using a plurality of instruction set architectures (ISAs). For example, the compiling unit 120 may compile the first data by using a first ISA and the second data by using a second ISA. The first ISA refers to an ISA using the first operator, and the second ISA refers to an ISA using the second operator.

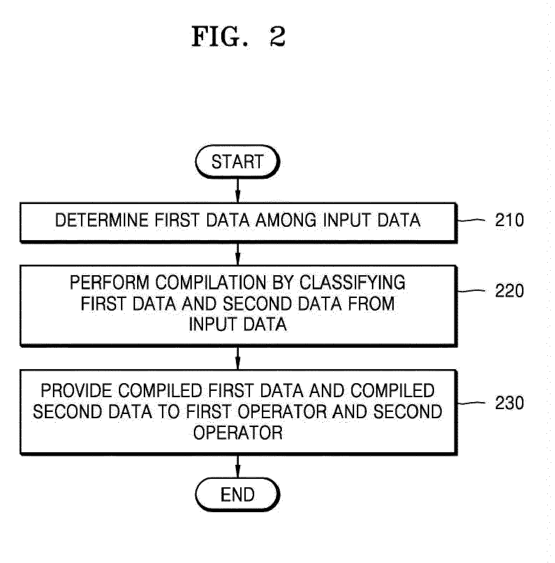

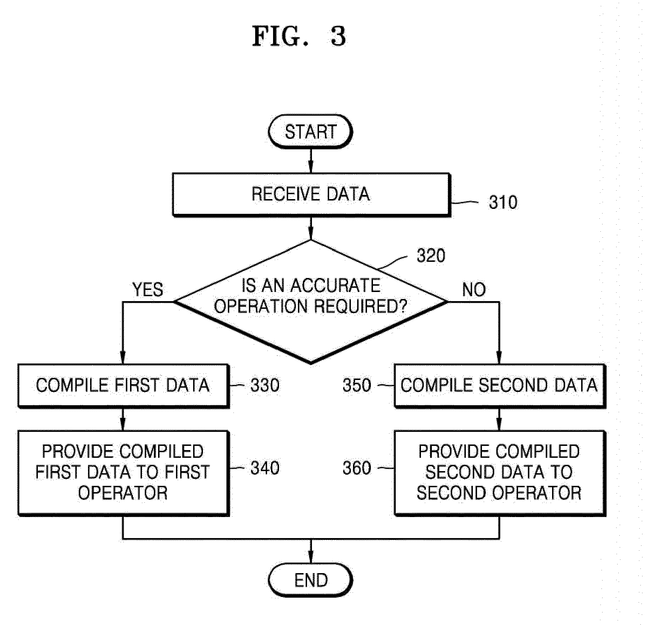

Referring to FIGS. 2 and 3, examples in which the data processing apparatus 100 process data are described. Data processing methods that are described below with reference to FIGS. 2 and 3 include operations that are time-serially processed in the data processing apparatus 100 of FIG. 1. Accordingly, although omitted in the following description, the description related to the data processing apparatus 100 of FIG. 1 may be applied to the data processing method of FIG. 2 or 3.

FIG. 2 is a flowchart for explaining an example of a data processing method.

In operation 210, the determination unit 110 determines the first data among the input data.

In operation 220, the compiling unit 120 classifies the input data into the first data and the second data and compiles classified first data and second data.

In operation 230, the compiling unit 120 provides compiled first data and compiled second data, respectively, to the first operator and the second operator. In accordance with one configuration, the first operator refers to an operator that performs a relatively accurate operation compared to the second operator.

FIG. 3 is a flowchart for explaining another example of the data processing method.

In operation 310, the data processing apparatus 100 receives data. In other words, data is input to the determination unit 110 of the data processing apparatus 100.

In operation 320, the determination unit 110 determines the first data requiring a relatively accurate operation among the input data. However, it is noted that this is merely an example and the second data may be determined to require a relatively accurate operation among the input data. The first data goes to operation 330 and the second data, that is, the remaining data of the input data excluding the first data, goes to operation 350.

In operation 330, the compiling unit 120 compiles the first data. For example, the compiling unit 120 may compile the first data by using the first ISA.

In operation 340, the compiling unit 120 provides compiled first data to the first operator 131. The first operator 131 performs a relatively accurate operation on the compiled first data.

In operation 350, the compiling unit 120 compiles the second data. For example, the compiling unit 120 may compile the second data by using the second ISA.

In operation 360, the compiling unit 120 provides compiled second data to the second operator 132. The second operator 132 performs an approximate operation on the compiled second data.

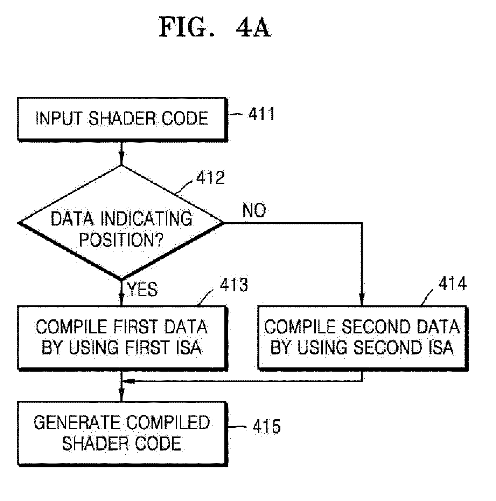

Examples in which the determination unit 110 determines the first data among the input data and the compiling unit 120 classifies the input data into the first data and the second data and compiles classified first data and second data are described below with reference to FIGS. 4A to 4E. Each of the examples to be described with reference to FIGS. 4A to 4E includes operations that are time-serially processed in the data processing apparatus 100 of FIG. 1. Accordingly, although omitted in the following description, the description related to the data processing apparatus 100 of FIG. 1 may be applied to the examples of FIGS. 4A to 4E.

FIG. 4A is a flowchart for explaining an example in which a determination unit determines first data with respect to data indicating a position and a compiling unit compiles the first data and second data.

In FIG. 4A, for convenience of explanation, it is assumed that the input data is a shader code.

In operation 411, the shader code is input to the determination unit 110.

In operation 412, the determination unit 110 determines data indicating the position of an object in the shader code. For example, the determination unit 110 selects a code including "position" in the shader code. However, the "position" is a mere example of a name indicating a variable designated with the built-in or API of the shader code. The determination unit 110 selects any data indicating a position without limitation.

The determination unit 110 sets data indicating the position in the shader code as the first data, and sets the remaining data excluding the first data as the second data.

In operation 413, the compiling unit 120 compiles the first data. For example, the compiling unit 120 may compile the first data by using the first ISA. The first ISA refers to an ISA using the first operator, and the first operator refers to an operator that performs a relatively accurate operation.

In operation 414, the compiling unit 120 compiles the second data. For example, the compiling unit 120 compiles the second data by using the second ISA. The second ISA refers to an ISA using the second operator, and the second operator refers to an operator that performs an approximate operation.

In operation 415, the compiling unit 120 generates a compiled shader code. According to operations 411 to 414, as the determination unit 110 determines the first data in the shader code and the compiling unit 120 classifies the input data into the first data and the second data and compiles classified first data and second data, the compiled shader code is generated. The compiled shader code includes the compiled first data and the compiled second data.

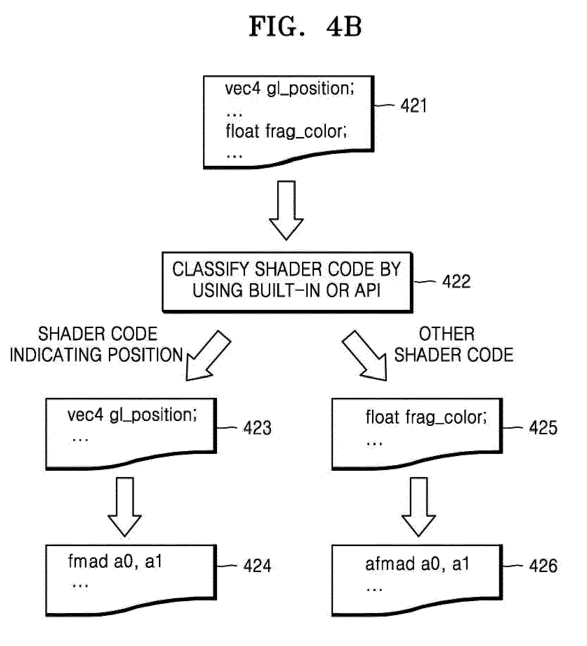

FIG. 4B illustrates an example according to the flowchart of FIG. 4A.

Referring to FIG. 4B, an example of a shader code 421 that is described above with reference to FIG. 4A is illustrated. The shader code 421 includes various codes needed for performing rendering of an object. For example, in one configuration, the shader code 421 includes codes such as "vec4 gl_position;" designating the position of an object, and "float frag_color;" designating the color of an object. In FIG. 4B, for convenience of explanation, only the code designating the position of an object and the code designating the color of an object are indicated among the various codes included in the shader code 421. However, the codes included in the shader code 421 are not limited thereto and thus other codes may be included in the shader code 421. For example, the shader code 421 may include shape codes and size codes.

Alternatively, the example of the shader code 421 illustrated in FIG. 4B is a code according to a 2-dimensional and 3-dimensional graphics standard API format, for example, OpenGL. However, in addition to the above codes, any set of commands for performing rendering of an object may be an example of the shader code 421.

In operation 422, the determination unit 110 classifies the shader code 421 by using the keywords included in the shader code 421. For example, the determination unit 110 classifies the shader code 421 into the first data and the second data by using a built-in or API of the shader code 421.

For example, the determination unit 110 selects a code including a keyword_"position" among the codes included in the shader code 421 as the first data. In other words, the determination unit 110 selects the code "vec4 gl_position;" among the codes included in the shader code 421 as the first data. Accordingly, the other codes included in the shader code 421 are designated as the second data.

In operations 423 and 425, the compiling unit 120 classifies the input data into the first data and the second data and compiles classified first data and second data. For example, in operation 423, the compiling unit 120 compiles the code "vec4 gl_position;" by using a first API. In operation 425, the compiling unit 120 compiles the other codes included in the shader code 421. That is, the compiling unit 120 compiles the codes of the shader code 421 excluding the code "vec4 gl_position;", by using a second API.

In operation 424, the compiling unit 120 outputs compiled first data. For example, the compiling unit 120 outputs the first data "fmad a0, a1" that is obtained by compiling the code "vec4 gl_position;".

In operation 426, the compiling unit 120 outputs compiled second data. For example, the compiling unit 120 outputs the second data "afmad a0, a1." That is, the compiling unit 120 outputs the second data obtained by compiling the code "float frag_color;".

As described above with reference to FIGS. 4A and 4B, the determination unit 110 determines a code indicating the position of an object among the codes included in the shader code 421 as the first data. Accordingly, the operation unit 130 performs a relatively accurate operation on the code indicating the position of an object and an approximate operation on the other codes of the shader code 421 excluding the code indicating the position of an object.

Alternatively, the data, that is, the first data, of the shader code 421, on which a relatively accurate operation is performed, is not limited to the data indicating the position of an object. In other words, the data requiring a relatively accurate operation of the shader code 421 may correspond to the first data without limitation.

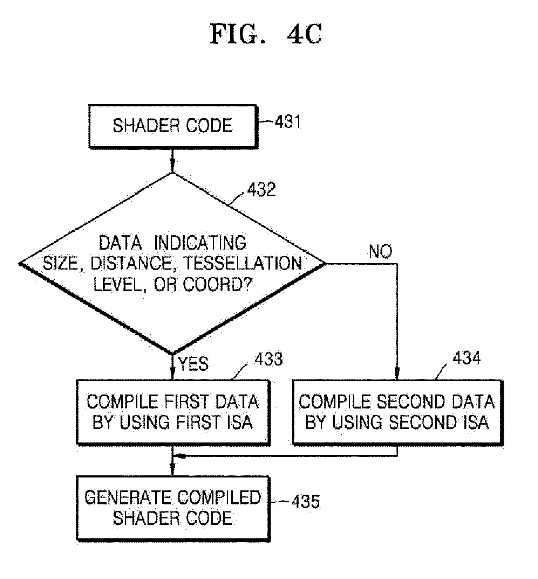

Another example in which the determination unit 110 determines the first data among the shader code is described below with reference to FIG. 4C.

FIG. 4C is a flowchart for explaining an example in which the determination unit 110 determines the first data with respect to other keywords included in the shader code 421 and the compiling unit 120 compiles the first data and the second data.

Referring to FIG. 4C, the shader code may include codes designating the size of an object, a distance between objects, a tessellation level, or coordinates, in addition to the codes indicating the position and color of an object. Also, the shader code may include codes indicating various pieces of information needed for performing rendering of an object, in addition to the above-described codes.

In operation 431, the shader code is input to the determination unit 110.

In operation 432, the determination unit 110 classifies the shader code by using the keywords included in the shader code. As described above with reference to FIG. 4B, the determination unit 110, in one configuration, selects a code including a keyword "position" among the codes included in the shader code, as the first data. However, referring to FIG. 4C, the determination unit 110 selects at least one of the codes designating the size of an object, a distance between objects, a tessellation level, or coordinates among the shader code, as the first data. For example, among the codes included in the shader code, a code including any one of keywords "position", "size", "distance", "coord", and "tesslevel", and a combination thereof, as the first data. However, it is noted that the codes are not limited thereto and thus more codes may be included in the shader code.

In this example, the determination unit 110 may select "Float gl_PointSize;", "Float gl_ClipDistance[];", "vec3 gl_TessCoord", "Float gl_TessLevelOuter", "Float gl_TessLevelInner", "Vec4 gl_FragCoord", "Vec2 gl_SamplePosition", "Vec4 gl_FrontColor", "Vec4 gl_BackColor", "Vec4 gl_FrontSecondaryColor", "Vec4 gl_BackSecondaryColor", "Vec4 gl_TexCoord[]",or "Float gl_FogFragCoord", among the codes included in the shader code, as the first data. Accordingly, the other codes included in the shader code may be designated as the second data.

The above-described codes are according to the 2-dimensional and 3-dimensional graphics standard API format, for example, OpenGL. However, in addition to the above codes, any set of commands for performing rendering of an object may be an example of the shader code.

In operation 433, the compiling unit 120 compiles the first data. For example, the compiling unit 120 compiles the first data by using the first ISA. Also, in operation 434, the compiling unit 120 compiles the second data. For example, the compiling unit 120 compiles the second data by using the second ISA. The examples of the first ISA and the second ISA are the same as those described above with reference to FIG. 4A.

In operation 435, the compiling unit 120 generates a compiled shader code. As the determination unit 110 determines the first data among the shader code and the compiling unit 120 classifies the input data into the first data and the second data and compiles classified first data and second data, according to operations 431 to 434, the compiled shader code is generated. The compiled shader code includes the compiled first data and the compiled second data.

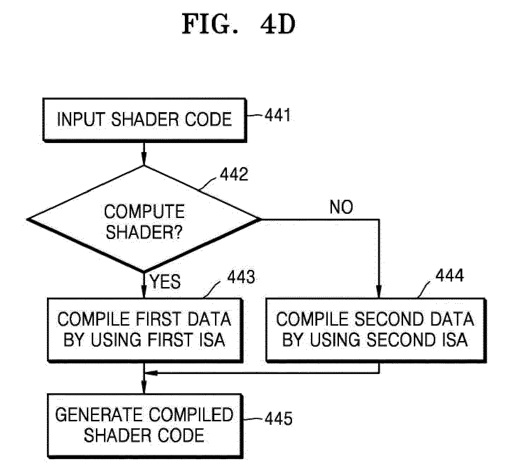

FIG. 4D is a flowchart for explaining an example in which the determination unit 110 determines a compute shader included in the shader code as the first data and the compiling unit 120 compiles the first data and the second data.

The compute shader is a program executable in a graphics card and refers to a shader that is not included in a general rendering pipeline. The compute shader may be used to accelerate a part of a massively parallel general-purpose computing on graphics processing unit (GPGPU) algorithm or game rendering.

Since the shader code illustrated in FIG. 4D corresponds to the shader code described above with reference to FIGS. 4A to 4C, a detailed description thereof is omitted.

In operation 441, the shader code is input to the determination unit 110.

In operation 442, the determination unit 110 determines a compute shader included in the shader code as the first data.

In operation 443, when the determination unit 110 determines to compute the shader included in the shader code as the first data, the compiling unit 120 compiles the first data. For example, the compiling unit 120 compiles the first data by using the first ISA. Meanwhile, when the determination unit 110 determines not to compute the shader included in the shader code as the first data, in operation 444, the compiling unit 120 compiles the second data. For example, the compiling unit 120 compiles the second data by using the second ISA. The examples of the first ISA and the second ISA are the same as those described above with reference to FIG. 4A.

In operation 445, the compiling unit 120 generates a compiled shader code. As the determination unit 110 determines the first data among the shader code and the compiling unit 120 classifies the input data into the first data and the second data and compiles classified first data and second data, according to operations 441 to 444, the compiled shader code is generated. The compiled shader code includes the compiled first data and the compiled second data.

The first data is not limited to the examples described above with reference to FIGS. 4A to 4D and any data requiring high accuracy, that is, data that is operated by an operator performing a relatively accurate operation, may be employed without limitation.

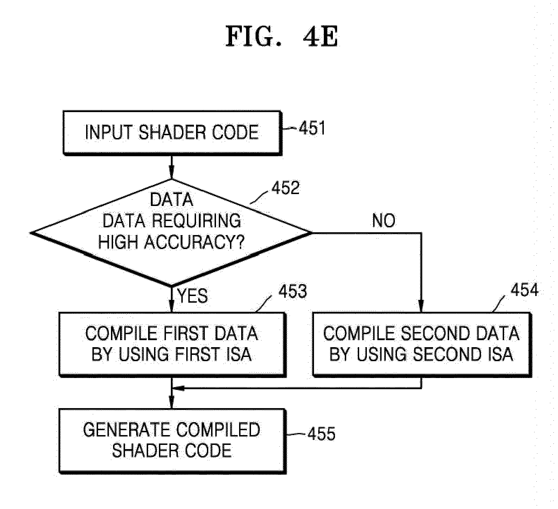

FIG. 4E is a flowchart for explaining an example in which the determination unit 110 determines the first data which requires high accuracy and is included in the shader code and the compiling unit 120 compiles the first data and the second data.

Referring to FIG. 4E, in operation 451, the shader code is input to the determination unit 110.

In operation 452, the determination unit 110 determines data requiring high accuracy among the shader code. The data requiring high accuracy refers to data having high accuracy in a result of an operation by an operator. In other words, when a result value generated as the operator operates data based on a predetermined function is accurate or has a predetermined error, for example, within 1%, it may be said to have high accuracy.

In the input data, for example, the shader code, the data requiring high accuracy may be previously set by a user, or automatically set without intervention of a user according to a type of the input data or a function performed by the data processing apparatus 100. Additionally, the data requiring high accuracy may be a combination of data previously set by the user and automatically set.

In operations 453 and 454, the compiling unit 120 classifies the input data into the first data and the second data and compiles classified first data and second data. For example, when the data requires high accuracy, the first data is compiled using a first ISA in operation 453. Alternatively, when the data does not require high accuracy, the second data is compiled using the second ISA in operation 454.

In operation 455, the compiling unit 120 generates a compiled shader code.

Referring back to FIG. 1, in one configuration, the operation unit 130 includes the first operator 131 and the second operator 132. The first operator 131 operates the compiled first data and the second operator 132 operates the compiled second data. However, it is noted that the operation unit 130 illustrated in FIG. 1 is not limited thereto and thus the operation unit 130 may include more or less operators.

The first operator 131 refers to an operator that performs a relatively accurate operation compared to the second operator 132. In other words, the data processing apparatus 100 includes two or more operators having different accuracies. For example, the first operator 131 and the second operator 132 each refers to an operator that operates a number represented by using a floating point method, but is not limited thereto.

The first operator 131 and the second operator 132 operate a mathematical function by using input data. The input data refers to data transmitted from the compiling unit 120. In other words, the first operator 131 and the second operator 132 output a result of inserting an operand in the mathematical function by using a register or a number represented by using the floating point method as the operand. The mathematical function may refer to a reciprocal function of a predetermined function, a reciprocal square root function, a log function with a base of 2, an exponential function with a base of 2, a trigonometric function , etc., but is not limited thereto. When the input data inserted in the mathematical function is included in a particular section, for example, a section in which the inclination of a graph corresponding to the mathematical function is close to 0, the same result value may be output.

In one configuration, the data continuously input to the first operator 131 and the second operator 132 is included in a predetermined range. For example, assuming that third data and fourth data are sequentially input to the first operator 131, the third data and the fourth data may be similar numbers included in a predetermined range.

For example, assuming that the third data is 8-bit data corresponding to 10.000001 expressed in a floating-point format and the fourth data is 8-bit data corresponding to 10.000010 expressed in a floating-point format, the third data and the fourth data have two lower bits that are different from each other and six upper bits that are identical to each other.

Accordingly, a result value obtained as the first operator 131 inserts the third data in the mathematical function and a result value obtained as the first operator 131 inserts the fourth data in the mathematical function may be identical to each other or very similar to each other. Accordingly, since the operation unit 130 operates the compiled second data that does not require high accuracy by using the second operator 132, a processing speed of the data processing apparatus 100 is increased and the amount of power needed for data processing is reduced.

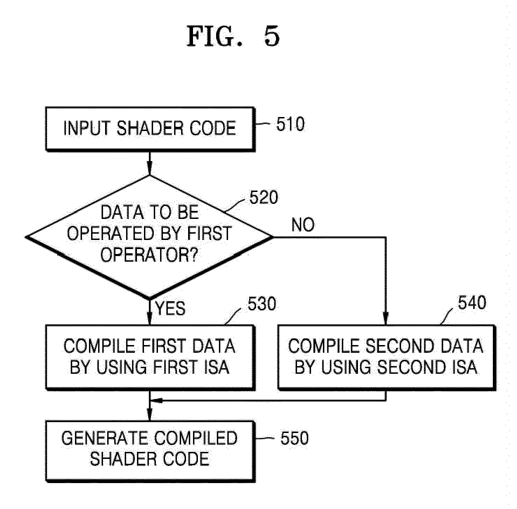

An example of the operation of the operation unit 130 is described below with reference to FIG. 5.

FIG. 5 is a flowchart for explaining an example in which the operation unit 130 operates the compiled first data and the compiled second data.

The flowchart of FIG. 5 includes operations that are time-serially processed in the operation unit 130 of FIG. 1. Accordingly, although omitted in the following description, the description related to the operation unit 130 of FIG. 1 may be applied to the flowchart of FIG. 5.

In operation 510, the data transmitted from the compiling unit 120 is input to the operation unit 130. For example, assuming that the compiling unit 120 compiles the shader code, a compiled shader code may be input to the operation unit 130.

In operation 520, the operation unit 130 determines whether an input data is the data to be operated by the first operator 131. In other words, the operation unit 130 determines whether the input data is the first data. If the data input to the operation unit 130 is the first data, operation 530 is performed. If the data input to the operation unit 130 is the second data, operation 540 is performed.

In operation 530, the operation unit 130 operates the first data by using the first operator 131. The first operator 131 refers to an operator that performs a relatively accurate operation.

In operation 540, the operation unit 130 operates the second data by using the second operator 132. The second operator 132 refers to an operator that performs an approximate operation. Accordingly, assuming that the same data is input to the first operator 131 and the second operator 132, a result output from the first operator 131 is a result with no error. In contrast, a result output from the second operator 132 is a result with a certain degree of error, compared to the result output from the first operator 131.

For example, the second operator 132 performs an approximate operation by inserting the second data in a polynomial expression that is similar to the mathematical function. The mathematical function refers to a function that is used by the operation unit 130 for the operation of data. For example, assuming that the mathematical function is a log function with a base of 2, the first operator 131 may perform an operation by inserting the first data in the log function and the second operator 132 may perform an operation by inserting the second data in a polynomial expression that is similar to the log function.

Values of coefficients included in the polynomial expression may be stored in a lookup table.

For example, the operation unit 130 produces the polynomial expression by using Equation 1 below.

$$\left\| f(x) - p(x) \right\| L^2, [a,b], w = \int_a^b w(x)(f(x) - p(x))^2 dx$$

[Equation 1]

In Equation 1, "f(x)" denotes a mathematical function that is used by the first operator 131 for the operation of data, and "p(x)" denotes a polynomial expression that is used by the second operator 132 for the operation of data. Also, "[a, b]" denotes a section of the data, for example, the compiled second data, input to the second operator 132, and "w" denotes a previously set value as a predetermined weight.

When the value "w" is set as a weight in the section "[a, b]" by using Equation 1, the operation unit 130 produces the polynomial expression "p(x)" in which a result of inserting the data in the mathematical function "f(x)" and a result of inserting the data in the polynomial expression "p(x)" are reduced.

In operation 550, the operation unit 130 multiplexes a result of the operation of the first operation unit 130 and a result of the operation of the second operation unit 130 and outputs a multiplexed result.

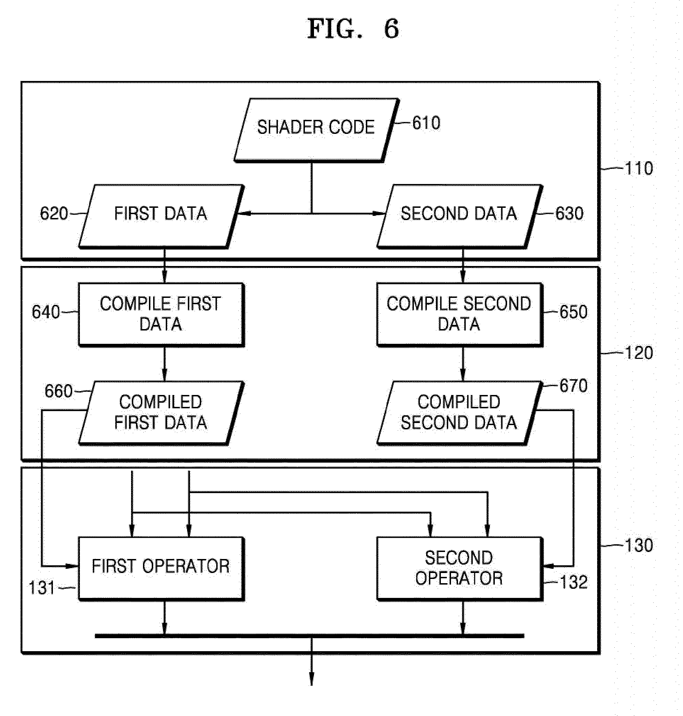

FIG. 6 is a view for explaining an example of the operation of the data processing apparatus 100.

The operations illustrated in FIG. 6 are the operations that are time-serially processed in the data processing apparatus 100 of FIG. 1. Accordingly, although omitted in the following description, the description related to the data processing apparatus 100 of FIG. 1 may be applied to the operations illustrated in FIG. 6.

When input data, for example, a shader code 610, is received, the determination unit 110 determines a first data 620 in the input data 610. For example, the determination unit 110 selects data indicating the position of an object included in the input data 610, as the first data 620. Accordingly, the remaining data included in the input data 610, that is, the data of the input data 610 excluding the first data 620, is designated as a second data 630.

The compiling unit 120 compiles the first data 620 by using the first ISA (640) and the second data 630 by using the second ISA (650). In other words, the compiling unit 120 classifies the input data 610 and compiles classified input data.

The operation unit 130 operates compiled first data 660 and compiled second data 670. For example, the first operator 131 included in the operation unit 130 accurately operates the compiled first data 660 and the second operator 132 included in the operation unit 130 approximately operates the compiled second data 670.

As described above with reference to FIGS. 1 to 6, the data processing apparatus 100 includes the determination unit 110, the compiling unit 120, and the operation unit 130. In other words, when the data processing apparatus 100 receives input data, a relatively accurately operated output value and an approximately operated output value are generated by the operation of the data processing apparatus 100.

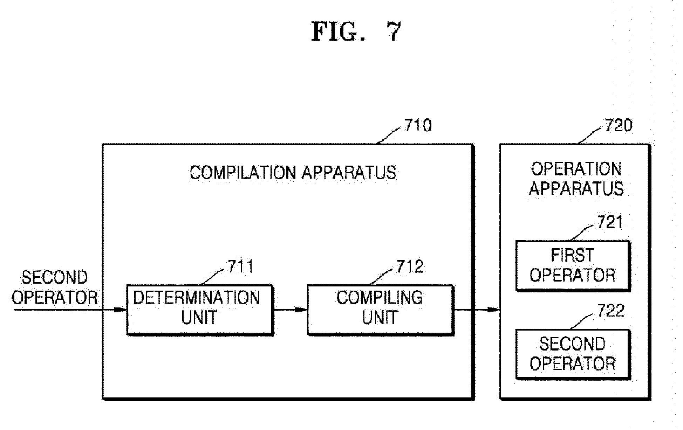

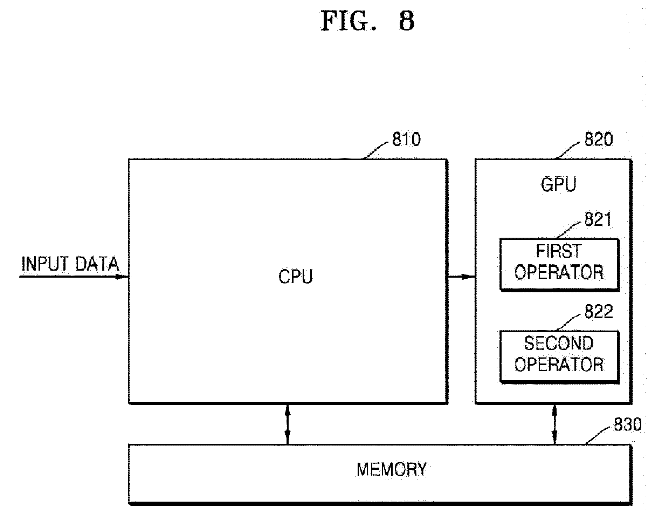

Alternatively, in some examples, some of the elements included in the data processing apparatus 100 may exist as independent apparatuses. Examples in which elements included in the data processing apparatus 100 are embodied by other apparatuses are described below with reference to FIGS. 7 and 8.

FIG. 7 is a block diagram illustrating an example of the compiling apparatus 710 and the operation apparatus 720.

FIG. 7 illustrates the compiling apparatus 710 and the operation apparatus 720. The compiling apparatus 710 and the operation apparatus 720 are independent apparatuses.

The compiling apparatus 710 includes a determination unit 711 and a compiling unit 712. The operation apparatus 720 includes a first operator 721 and a second operator 722. Although FIG. 7 illustrates the compilation apparatus 710 including only the determination unit 711 and the compiling unit 712, it is noted that one of ordinary skill in the art would readily recognize that the compilation apparatus 710 may include more or less components and thus the compilation apparatus 710 is not limited to the one illustrated in FIG. 7. Similarly, although FIG. 7 illustrates the operation apparatus 720 including only the first operator 721 and the second operator 722, one of ordinary skill in the art would readily recognize that the operation apparatus 720 may include more or less components and thus the operation apparatus 720 is not limited to the one illustrated in FIG. 7.

The compiling apparatus 710 and the operation apparatus 720 illustrated in FIG. 7 may correspond to one or a plurality of processors. The processor may be embodied in an array of a plurality of logic gates, or a combination of a general-purpose microprocessor and a memory storing a program executable in the microprocessor. Also, a person of ordinary skill in the art may understand that the processor can be embodied by hardware of a different form.

In comparison between FIG. 1 and FIG. 7, the compiling apparatus 710 of FIG. 7 is the same as the data processing apparatus 100 of FIG. 1 where the operation unit 130 is excluded. In other words, the determination unit 110 and the compiling unit 120 included in the data processing apparatus 100 may form one apparatus. Also, although not illustrated in FIG. 7, the determination unit 711 and the compiling unit 712 included in the compiling apparatus 710 may be embodied as independent apparatuses.

The determination unit 711 determines the first data requiring a relatively accurate operation among the input data. The input data may include various pieces of information, in particular the data requiring a relatively accurate operation, that is, the first data, and the data that does not require a relatively accurate operation. Also, as an example, the input data may include a shader code.

The compiling unit 712 classifies the input data into the first data and the second data and compiles classified first data and second data. An example in which the compiling unit 712 compiles the first data and the second data is the same as that described above with reference to FIG. 1.

The operation apparatus 720 receives data compiled by the compiling apparatus 710, and operates received data by using operators having different accuracies, that is, the first operator 721 and the second operator 722. For example, in one configuration, the first operator 721 included in the operation apparatus 720 is an operator that performs a relatively accurate operation and the second operator 722 is an operator that performs an approximate operation. The first operator 721 and the second operator 722 illustrated in FIG. 7 are the same as the first operator 131 and the second operator 132 illustrated in FIG. 1. Also, an example in which the second operator 722 performed an approximate operation is the same as that described above with reference to FIG. 5. FIG. 8 is a block diagram illustrating an example in which the operation unit is included in a graphics processing unit (GPU).

In FIG. 8, a CPU 810, a GPU 820, and a memory 830 are illustrated. The GPU 820 includes a first operator 821 and a second operator 822.

Referring to FIG. 8, the GPU 820 includes the first operator 821 and the second operator 822. The first operator 821 and the second operator 822 illustrated in FIG. 8 are the same as the first operator 131 and the second operator 132 illustrated in FIG. 1 or the first operator 721 and the second operator 722 illustrated in FIG. 7. Accordingly, detailed descriptions about the first operator 821 and the second operator 822 are omitted in the following description.

The CPU 810 transmits data to the GPU 820. The data transmitted by the CPU 810 includes data that is to be operated by the first operator 821 and the second operator 822. In other words, the CPU 810 transmits, to the GPU 820, data on which a relatively accurate operation is performed by the first operator 821 and data on which an approximate operation is performed by the second operator 822. For example, the data transmitted by the CPU 810 may be a shader code or a compiled shader code. An example in which the CPU 810 compiles the shader code is the same as that described above with reference to FIG. 1.

The memory 830 stores information or data needed for processing of data by the CPU 810 and the GPU 820 and a result of the data processing by the CPU 810 and the GPU 820.

As described above, since the operator that performs a relatively accurate operation and the operator that performs an approximate operation are separately used according to a level of accuracy required for the processing of input data, the amount of power consumed for the data processing and the size of an apparatus including the above-described operators is reduced.

Also, data indicating a position and data indicating a color which are included in 3-dimensional graphics are separately processed.

The apparatuses, units, operators, and other components illustrated in FIGS. 1, 6, 7, and 8 that perform the operations described herein with respect to FIGS. 2, 3, 4A-4E and 5 are implemented by hardware components. Examples of hardware components include controllers, sensors, generators, drivers, and any other electronic components known to one of ordinary skill in the art. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to,

**EP 3 023 874 A1**

one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 2, 3, 4A-4E and 5. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 2, 3, 4A-4E and 5 that perform the operations described herein with respect to FIGS. 1, 6, 7 and 8 are performed by a processor or a computer as described above executing instructions or software to perform the operations described herein.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

While this disclosure includes specific examples, it will be apparent to one of ordinary skill in the art that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. A method of processing data, the method comprising:

    classifying input data into first data and second data, the second data being different from the first data;
    separately compiling the first data and the second data; and
    providing the compiled first data and the compiled second data to a first operator and a second operator, respectively,
    wherein the first operator performs an operation different from an operation performed by the second operator.

2. The method of claim 1, wherein, the compiling of the first data and second data comprises compiling the first data by using a first instruction set architecture, ISA, included in a compiling unit and compiling the second data by using a second ISA included in the compiling unit, and optionally wherein the first ISA uses the first operator and the second ISA uses the second operator.

3. The method of claim 1 or 2, wherein the input data comprises a shader code for rendering an object.

4. The method of any preceding claim, further comprising determining the first data based on a keyword included in the input data.

5. The method of any preceding claim, wherein the operation performed by the first operator on the first data has an error rate lesser than an error rate of the operation performed by the second operator on the second data.

6. The method of any preceding claim, wherein the first data comprises data indicating a position of an object to be rendered.

7. The method of any preceding claim, wherein the second data comprises data indicating a color of an object.

8. The method of any preceding claim, wherein the operation performed by the second operator is performed by using a polynomial expression obtained based on an approximation of a predetermined function.

9. The method of any preceding claim, wherein each of the first operator and the second operator comprises an operator that operates a number represented by using a floating point method.

10. A computer program comprising computer program code means adapted to perform all of the steps of any preceding claim when said program is run on a computer.

11. An apparatus for processing input data, the apparatus comprises:

a compiling unit configured to classify the input data into first data and second data, the second data being different from the first data, and to separately compile the first data and the second data; and
an operation unit comprising a first operator configured to perform an operation based on the compiled first data and a second operator configured to perform an operation based on the compiled second data,
wherein the operation performed by the first operator is different from the operation performed by the second operator.

12. The apparatus of claim 11, wherein the compiling unit is further configured to compile the first data by using a first instruction set architecture (ISA) and compiles the second data by using a second ISA, and optionally wherein the first ISA uses the first operator and the second ISA uses the second operator.

13. The apparatus of claim 11 or 12, further comprising a determination unit configured to determine the first data based on a keyword included in the input data.

14. The apparatus of claim 11, 12 or 13, wherein the operation performed by the first operator on the first data is has an error rate lesser than an error rate of the operation performed by the second operator on the second data.

15. The apparatus of any of claims 11 to 14, wherein the operation performed by the second operator is performed by using a polynomial expression obtained based on an approximation of a predetermined function.

# FIG. 1

# FIG. 2

START

| DETERMINE FIRST DATA AMONG INPUT DATA | — 210 |

| PERFORM COMPILATION BY CLASSIFYING FIRST DATA AND SECOND DATA FROM INPUT DATA | — 220 |

| PROVIDE COMPILED FIRST DATA AND COMPILED SECOND DATA TO FIRST OPERATOR AND SECOND OPERATOR | — 230 |

END

## FIG. 3

START

RECEIVE DATA — 310

320
YES | IS AN ACCURATE OPERATION REQUIRED? | NO

COMPILE FIRST DATA — 330

350 — COMPILE SECOND DATA

PROVIDE COMPILED FIRST DATA TO FIRST OPERATOR — 340

360 — PROVIDE COMPILED SECOND DATA TO SECOND OPERATOR

END

FIG. 4A

```
┌─────────────────────┐
│  INPUT SHADER CODE  │──── 411
└─────────────────────┘
            │
            ▼
         ╱────────────╲  ── 412
        ╱ DATA INDICATING ╲         NO
       ╱   POSITION?        ╲──────────────────┐
        ╲                  ╱                    │
         ╲────────────╱                         │
            │ YES        ── 413                  │ ── 414
            ▼                                    ▼
┌─────────────────────┐          ┌─────────────────────┐
│  COMPILE FIRST DATA │          │ COMPILE SECOND DATA │
│  BY USING FIRST ISA │          │  BY USING SECOND ISA│
└─────────────────────┘          └─────────────────────┘
            │                                    │
            ▼◄───────────────────────────────────┘
┌─────────────────────┐
│  GENERATE COMPILED  │──── 415
│    SHADER CODE      │
└─────────────────────┘
```

# FIG. 4B

vec4 gl_position;
...
float frag_color;
... — 421

⬇

CLASSIFY SHADER CODE BY
USING BUILT-IN OR API — 422

SHADER CODE
INDICATING POSITION ⬊

OTHER
⬋ SHADER CODE

vec4 gl_position;
... — 423

float frag_color;
... — 425

⬇

⬇

fmad a0, a1
... — 424

afmad a0, a1
... — 426

# FIG. 4C

SHADER CODE ──431

↓

DATA INDICATING
SIZE, DISTANCE, TESSELLATION
LEVEL, OR COORD? ──432

NO →

YES ──433

COMPILE FIRST DATA
BY USING FIRST ISA

COMPILE SECOND DATA
BY USING SECOND ISA ──434

GENERATE COMPILED
SHADER CODE ──435

# FIG. 4D

INPUT SHADER CODE —441

442

COMPUTE
SHADER?

NO

YES        443                    444

COMPILE FIRST DATA          COMPILE SECOND DATA
BY USING FIRST ISA          BY USING SECOND ISA

GENERATE COMPILED —445
SHADER CODE

# FIG. 4E

INPUT SHADER CODE — 451

DATA
DATA REQUIRING
HIGH ACCURACY? — 452

NO

YES — 453

COMPILE FIRST DATA
BY USING FIRST ISA

COMPILE SECOND DATA
BY USING SECOND ISA — 454

GENERATE COMPILED
SHADER CODE — 455

# FIG. 5

```
┌─────────────────────────┐
│    INPUT SHADER CODE     │──── 510
└─────────────────────────┘
            │
            ▼
         ╱────────╲  520
       ╱   DATA TO BE ╲        NO
      ╱ OPERATED BY FIRST ╲──────────────┐
       ╲   OPERATOR?   ╱                  │
         ╲────────╱                       │
            │ YES    530                  │           540
            ▼                             ▼
┌─────────────────────────┐   ┌─────────────────────────┐
│   COMPILE FIRST DATA     │   │   COMPILE SECOND DATA    │
│   BY USING FIRST ISA     │   │   BY USING SECOND ISA    │
└─────────────────────────┘   └─────────────────────────┘
            │                             │
            ▼◄────────────────────────────┘
┌─────────────────────────┐
│   GENERATE COMPILED      │──── 550
│     SHADER CODE          │
└─────────────────────────┘
```

# FIG. 6

SHADER CODE —610

110

620— FIRST DATA ◄───────► SECOND DATA —630

640— COMPILE FIRST DATA

COMPILE SECOND DATA —650

120

660— COMPILED FIRST DATA

—670 COMPILED SECOND DATA

FIRST OPERATOR

SECOND OPERATOR

131— ───132

130

## FIG. 7

# FIG. 8

Europäisches Patentamt

European Patent Office

Office européen des brevets

# EUROPEAN SEARCH REPORT

Application Number

EP 15 17 9373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/125836 A1 (SAZEGARI ALI [US] ET AL) 20 May 2010 (2010-05-20) | 1-5,9-14 | INV.<br>G06F9/45 |
| Y | * paragraph [0004] *<br>* paragraphs [0039] - [0042] * | 6-8,15 | G06F7/483<br>G06F9/30 |
| Y | US 2005/289519 A1 (SAZEGARI ALI [US] ET AL) 29 December 2005 (2005-12-29)<br>* paragraph [0012] * | 6-8,15 | |

----- 

TECHNICAL FIELDS
SEARCHED      (IPC)

G06F

The present search report has been drawn up for all claims

| Place of search | Date of completion of the search | Examiner |
|---|---|---|
| Munich | 21 March 2016 | Del Castillo, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 17 9373

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2016

| Patent document cited in search report | | Publication date | Patent family member(s) | Publication date |
|---|---|---|---|---|
| US 2010125836 | A1 | 20-05-2010 | NONE | |
| US 2005289519 | A1 | 29-12-2005 | NONE | |

EPO FORM P0459

For more details about this annex : see Official Journal of the European Patent Office, No. 12/82